(19) Europäisches Patentamt
European Patent Office
Office européen des brevets

(11) **EP 4 425 698 A2**

(12) **DEMANDE DE BREVET EUROPEEN**

(43) Date de publication:
**04.09.2024 Bulletin 2024/36**

(21) Numéro de dépôt: **24180616.5**

(22) Date de dépôt: **24.02.2017**

(51) Classification Internationale des Brevets (IPC):
**H01P 3/12** *(2006.01)*

(52) Classification Coopérative des Brevets (CPC):
**H01P 11/002; H01P 3/12;** H01Q 21/064

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(62) Numéro(s) de document de la (des) demande(s) initiale(s) en application de l'article 76 CBE:
**17708589.1 / 3 424 103**

(71) Demandeur: **SWISSto12 SA**
**1020 Renens (CH)**

(72) Inventeurs:
• **de Rijk, Emile**
**1218 Grand-Saconnex (CH)**
• **Favre, Mirko**
**1096 Cully (CH)**

• **Billod, Mathieu**
**74160 Présilly (CH)**
• **Dimitriades, Alexandre**
**1260 Nyon (CH)**
• **Macor, Allessandro**
**décédé(e) (CH)**

(74) Mandataire: **P&TS SA (AG, Ltd.)**
**Avenue J.-J. Rousseau 4**
**P.O. Box 2848**
**2001 Neuchâtel (CH)**

Remarques:
Cette demande a été déposée le 06.06.2024. comme demande divisionnaire de la demande mentionnée sous le code INID 62.

(54) **PROCÉDÉ DE FABRICATION ADDITIVE D'UN GUIDE D'ONDE AINSI QUE DISPOSITIFS À GUIDE D'ONDE FABRIQUÉS SELON CE PROCÉDÉ**

(57) Procédé de fabrication de dispositif (1) à guide d'onde comprenant les étapes suivantes :
fabriquer une âme (2) en matériau non conducteur, ladite âme comportant des parois latérales avec des surfaces externes (21) et internes (20), les surfaces internes définissant un canal de guide d'ondes (5);
déposer une couche de métal conducteur (3) sur les surfaces internes (20), par immersion dans un fluide de réactifs ;
caractérisé en ce que ladite âme (2) comporte au moins un trou (7) entre lesdites surfaces externes et internes, spécifiquement destiné à favoriser l'évacuation de bulles dans ledit canal (5) et/ou la circulation du fluide lors de ladite immersion.

Fig.8

EP 4 425 698 A2

**Description**

<u>Domaine technique</u>

La présente invention concerne un procédé de fabrication additive de dispositif à guide d'onde et un guide d'onde fabriqué selon ce procédé.

<u>Etat de la technique</u>

Les signaux radiofréquence (RF) peuvent se propager soit dans un espace, soit dans des dispositifs guide d'onde. Ces dispositifs guide d'onde sont utilisés pour canaliser les signaux RF ou pour les manipuler dans le domaine spatial ou fréquentiel.

La présente invention concerne en particulier les dispositifs RF passifs qui permettent de propager et de manipuler des signaux radiofréquence sans utiliser de composants électroniques actifs. Les guides d'onde passifs peuvent être répartis en trois catégories distinctes :

- Les dispositifs basés sur le guidage d'ondes à l'intérieur de canaux métalliques creux, couramment appelés guides d'ondes.

- Les dispositifs basés sur le guidage d'ondes à l'intérieur de substrats diélectriques.

- Les dispositifs basés sur le guidage d'ondes au moyen d'ondes de surface sur des substrats métalliques tels que des circuits imprimés PCB, des microstrips, etc.

La présente invention concerne en particulier la première catégorie ci-dessus, collectivement désignée par la suite comme guides d'ondes. Des exemples de tels dispositifs incluent des guides d'ondes en tant que tels, des filtres, des antennes, des convertisseurs de mode, etc. Ils peuvent être utilisés pour le routage de signal, le filtrage fréquentiel, la séparation ou recombinaison de signaux, l'émission ou la réception de signaux dans ou depuis l'espace libre, etc.

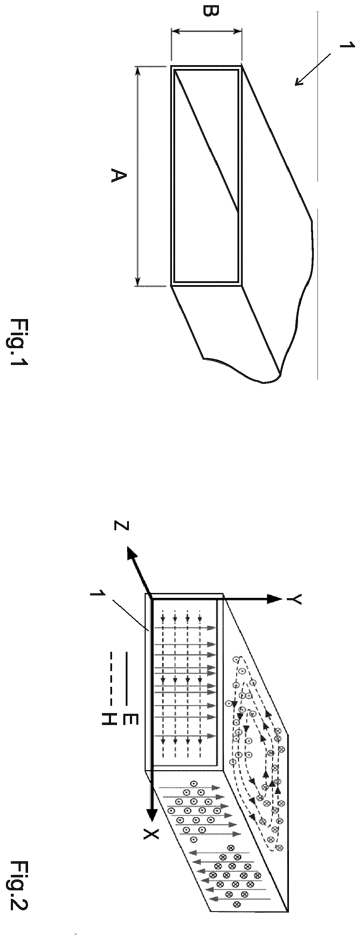

Un exemple de guide d'ondes conventionnel est illustré sur la figure 1. Il est constitué par un dispositif creux, dont la forme et les proportions déterminent les caractéristiques de propagation pour une longueur d'onde donnée du signal électromagnétique. Les guides d'onde classiques utilisés pour les signaux radiofréquence ont des ouvertures internes de section rectangulaire ou circulaire. Ils permettent de propager des modes électromagnétiques correspondant à différentes distributions de champ électromagnétique le long de leur section. Dans l'exemple illustré le guide d'onde a une hauteur b le long de l'axe y et une largeur a le long de l'axe z.

La figure 2 illustre schématiquement les lignes de champ électrique E et magnétique H dans un tel guide d'onde. Le mode de propagation dominant est dans ce cas le mode transversal électrique appelé $TE_{10}$. L'indice 1 indique le nombre de demi-longueurs d'onde à travers la largeur du guide, et 0 le nombre de demi longueur d'onde le long de la hauteur.

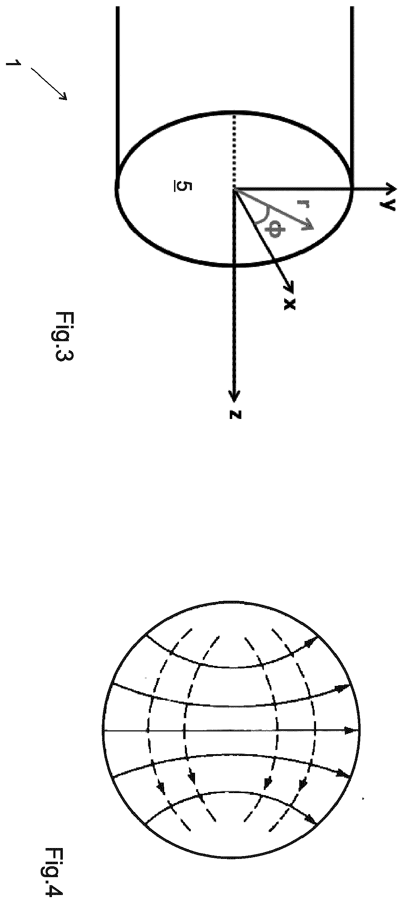

Les figures 3 et 4 illustrent un guide d'ondes à section circulaire. Des modes de transmission circulaires peuvent se propager dans un tel guide d'onde. Les flèches sur la figure 4 illustrent le mode de transmission $TE_{11}$ ; les flèches sensiblement verticales montrent le champ électrique, les flèches davantage horizontales le champ magnétique. L'orientation du champ change à travers la section du guide d'onde.

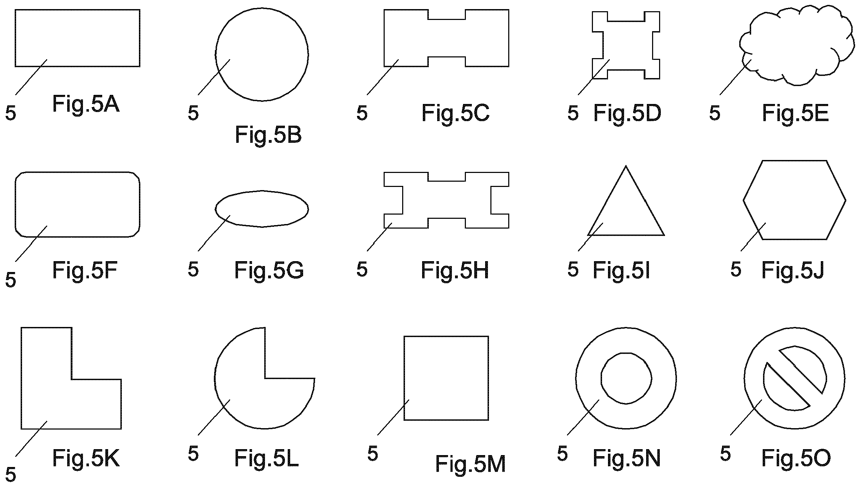

Mis à part ces exemples d'ouvertures de guide d'ondes rectangulaires ou circulaires, d'autres formes d'ouverture ont été imaginées ou peuvent être imaginées dans le cadre de l'invention et qui permettent de maintenir un ou plusieurs mode(s) électromagnétique(s) à une fréquence de signal donnée afin de transmettre un signal électromagnétique. Des exemples d'ouverture de guide d'onde possibles sont illustrés sur la figure 5. La surface illustrée correspond à la section de l'ouverture du guide d'onde, délimitée par des surfaces conductrices électriquement. La forme et la surface de la section peuvent en outre varier le long de la direction principale du dispositif à guide d'ondes.

La fabrication de guides d'ondes avec des sections complexes est difficile et coûteuse. Afin d'y remédier, la demande de brevet US2012/0084968 propose de réaliser des guides d'ondes par impression 3D. A cet effet, une âme en plastique non conducteur est imprimée par une méthode additive puis recouverte d'un placage métallique par électrodéposition. Les surfaces internes du guide d'onde doivent en effet être conductrices électriquement pour opérer. L'utilisation d'une âme non conductrice permet d'une part de réduire le poids et le coût du dispositif, d'autre part de mettre en oeuvre des méthodes d'impression 3D adaptées aux polymères ou aux céramiques et permettant de produire des pièces de haute précision avec une faible rugosité de paroi. Les pièces décrites dans ce document ont des formes complexes et comprennent d'une part un canal pour la propagation de l'onde, et d'autre part des trous de fixation sur un pied du guide d'onde, afin de le fixer à un autre élément.

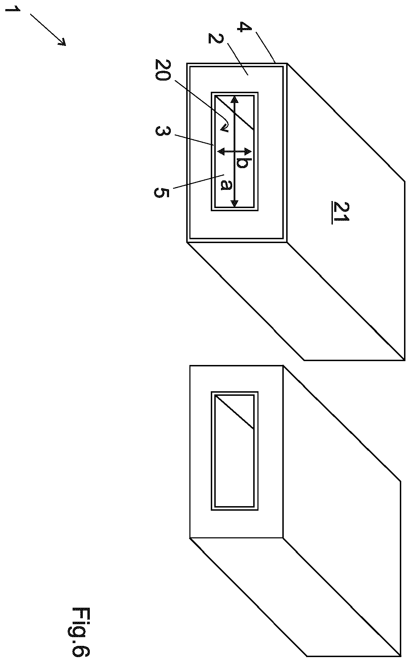

Un exemple de guide d'onde 1 qui pourrait être réalisé par fabrication additive est illustré sur la figure 6. Il comporte une âme 2 non conductrice, par exemple en polymère ou céramique, qui est fabriquée par exemple par stéréolithographie ou par un autre procédé additif et qui définit une ouverture interne 5 pour la propagation du signal RF. Dans cet exemple, la fenêtre a une section rectangulaire de largeur a et de hauteur b. Les parois internes de cette âme autour de l'ouverture 5 sont revêtues d'un revêtement électriquement conducteur 3, par exemple d'un placage métallique. Dans cet exemple, les parois externes du guide d'onde sont également revêtues d'un placage métallique 4 qui peut être du même métal et de la même épaisseur. Ce revêtement externe renforce le guide d'onde face aux sollicitations mécaniques ou chimiques externes.

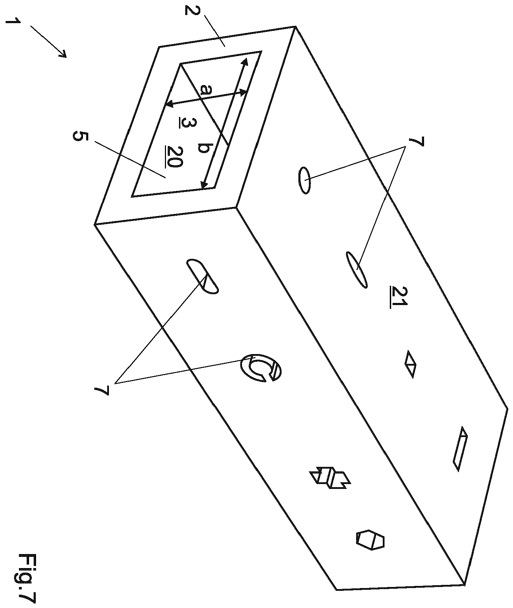

La figure 7 illustre une variante de guide d'onde similaire à celui de la figure 6, mais sans le revêtement conducteur sur les faces externes.

Différentes techniques peuvent être mises en oeuvre pour la déposition du revêtement métallique sur les faces internes et éventuellement externe de l'âme. Le problème est cependant complexe en raison de la taille réduite de l'ouverture, des formes complexes qu'il s'agit souvent de recouvrir, et de la nécessité de contrôler avec une grande précision les dimensions de l'ouverture et donc l'épaisseur du revêtement.

Des méthodes d'électrodéposition ont par exemple été mises en oeuvre, basées sur l'utilisation d'un courant électrique entre une cathode sur la face à recouvrir et une anode immergée dans un liquide rempli d'ions métalliques. A titre d'exemple, Yiley Huang et al., dans « Layer-by-Layer stereolithography of three-dimensional antennas", présenté lors du « Antennas and propagation society symposium », 2005, IEEE Washington, DC, July 3-8 2005, vol. 1A, page 276, ISBN : 978-0-7803-8883-3, décrivent une méthode d'électrodéposition de métal sur un composant microonde réalisé par stéréolithographie. L'âme étant non conductrice, cette méthode requiert le dépôt d'une couche conductrice intermédiaire pouvant servir de cathode. Le dépôt de cette couche intermédiaire est difficile ; dans cette publication, elle est réalisée sous la forme d'une encre conductrice d'environ 50microns. La publication ne décrit pas comment déposer une couche uniforme d'encre puis de métal électrodéposé dans des endroits difficilement accessibles, par exemple au milieu d'un canal long et étroit. La connexion électrique des portions de la cathode difficilement atteignable à l'intérieur du guide d'onde est également problématique.

Pour cette raison, des méthodes de déposition chimiques, sans courant électrique, sont parfois privilégiées. Elles mettent en oeuvre l'immersion de la pièce à plaquer successivement dans un ou plusieurs bains contenant des réactifs qui déclenchent des réactions chimiques aboutissant à la déposition du matériau métallique choisi, par exemple du cuivre, de l'or, de l'argent, du nickel, etc, sur la surface à recouvrir.

L'efficacité et la dynamique de la déposition dépendent de nombreux facteurs, y compris notamment la concentration de réactifs et d'ions métalliques dans les différents bains à proximité des surfaces à recouvrir.

Des essais effectués dans le cadre de cette invention ont cependant montré que la déposition chimique, sans courant électrique, de métal conducteur sur les parois de canaux guide d'onde de forme complexe présente cependant au moins deux difficultés :

Tout d'abord, la présence fréquente de bulles d'air piégées dans le canal du guide d'onde provoque souvent un plaquage insuffisant, ou même une absence totale de plaquage, sur certaines surfaces. Les bulles d'air empêchent en effet tout contact entre les agents réactifs du liquide et certaines portions de la surface à recouvrir. Les bulles qui se trouvent au milieu du canal, à distance des extrémités, ont notamment des difficultés à le quitter.

Ensuite, les réactifs liquides ont tendance à stagner dans les canaux du guide d'onde. La réaction chimique de déposition consomme alors rapidement tous les réactifs du liquide stagnant dans les canaux. Lorsque tous les réactifs ont été consumés, la réaction de déposition s'arrête en laissant les canaux guide d'onde avec des défauts de plaquage ou un plaquage d'épaisseur insuffisante et irrégulière. Ces défauts sont particulièrement importants dans le cas de canaux de longueur importante et de faible section ; dans ce cas, le milieu du canal est particulièrement susceptible de laisser les réactifs stagner pendant la déposition, et d'être moins bien recouvert.

Le document US2012/0084968 déjà cité palie à cet inconvénient en réalisant des canaux longs et étroits à l'aide de demi-coques métallisées puis assemblées entre elles. La fabrication d'un canal à l'aide de demi-coques est cependant plus longue, puisqu'elle nécessite une étape d'assemblage supplémentaire, et le résultat de moins grande qualité, puisque la fente entre les deux demi-coques peut perturber la transmission du signal.

Bref résumé de l'invention

Un but de la présente invention est de proposer un procédé de fabrication de dispositif à guide d'onde qui soit exempt des limitations ci-dessus.

Un autre but de l'invention est de proposer un dispositif à guide d'onde fabriqué selon ce procédé et qui soit exempt des limitations des dispositifs à guides d'onde ci-dessus.

Selon l'invention, ces buts sont atteints notamment au moyen d'un procédé de fabrication de dispositif à guide d'onde comprenant les étapes suivantes :

-   fabriquer une âme en matériau conducteur ou non conducteur, ladite âme comportant des parois latérales avec des surfaces externes et internes, les surfaces internes définissant un canal de guide d'ondes ;

    déposer une couche de métal conducteur sur les surfaces internes, par immersion dans un fluide de réactifs ;
    ladite âme comportant au moins un trou entre lesdites surfaces externes et internes des parois latérales, spécifiquement destiné à favoriser l'évacuation de bulles dans ledit canal et la circulation du fluide lors de ladite immersion.

Par dispositif à guide d'onde, on entend dans la présente demande tout dispositif comportant un canal creux délimité par des parois conductrices et destiné au guidage d'ondes électromagnétiques RF dans le canal, par exemple pour la transmission d'un signal électromagnétique à distance, le filtrage, la réception et l'émission dans l'éther (antennes), la conversion de mode, la séparation de signaux, la recombinaison de signaux, etc.

L'invention concerne en particulier des dispositifs aptes à fonctionner dans les bandes de fréquence L, S, C, X, Ku, K, Ka, Q, V, W, F, D ou G.

Le ou les trous permettent une déposition de métal conducteur plus régulière en évitant l'accumulation de bulles dans le canal, et en permettant un échange de fluide amélioré entre l'intérieur et l'extérieur du guide d'onde lors de la déposition.

Les trous sont particulièrement utiles pour éviter la stagnation de réactif près du milieu d'un canal guide d'onde long et de faible section, et pour permettre à d'éventuelles bulles de quitter cette portion du canal.

Les parois latérales qui entourent le canal guide d'onde sont de préférence métallisées en une seule opération. Cela permet d'éviter la présence de fentes entre des parois assemblées après la métallisation.

A cet effet, les trous sont avantageusement prévus dans les parois latérales d'un canal guide d'onde fabriqué par un procédé additif. La couche métallique est déposée par électrodéposition sur toutes les surfaces internes du canal fermé.

Si l'on partage par la pensée le canal guide d'onde en trois sections longitudinales de même longueur, on prévoira avantageusement au moins un trou dans la section intermédiaire.

La section du canal est nettement plus importante que celle du ou des trous, qui ne perturbent donc que peu les performances radioélectriques, par exemple l'efficacité de transmission du guide d'onde.

Le ou les trous s'étendent de préférence perpendiculairement aux parois qu'ils traversent.

Le ou les trous s'étendent de préférence perpendiculairement à la direction principale du canal.

La fabrication de l'âme peut comporter une étape de fabrication additive, par exemple une étape de fabrication par stéréolithographie.

L'expression « fabrication additive » décrit tout procédé de fabrication de pièces par ajout de matière, selon des données informatiques stockées sur un support informatique et définissant un modèle de la pièce. Outre la stéréolithographie, l'expression désigne aussi d'autres méthodes de fabrication par durcissement ou coagulation de liquide ou de poudre notamment, y compris sans limitation des méthodes basées sur des jets d'encre (binder jetting), DED (Direct Energy Déposition), EBFF (Electron beam freeform fabrication), FDM (fused déposition modeling), PFF (plastic freeforming), par aérosols, BPM (ballistic particle manufacturing), lit de poudre, SLS (Selective Laser Sintering), ALM (additive Layer Manufacturing), polyjet, EBM (electron beam melting), photopolymerisation, etc.

Le procédé peut comporter une étape de traitement de surface de l'âme afin de favoriser l'accrochage de la couche de métal conducteur. Le traitement de surface peut comporter une augmentation de la rugosité de surface, et/ou la déposition d'une couche intermédiaire d'accrochage.

L'étape de fabrication additive peut générer une âme qui inclut déjà le ou lesdits trous. La forme et l'emplacement des trous sont donc définis par le fichier informatique utilisé pour l'impression additive de l'âme.

Dans une variante, le ou les trous sont percés après l'étape de fabrication additive. Cette variante implique cependant une étape supplémentaire.

Les bords du trou peuvent être métallisés au cours de l'étape de déposition.

Les trous peuvent être rebouchés après la métallisation, par exemple par insertion d'une goupille ou remplissage d'une colle conductrice.

Les faces externes du dispositif peuvent être métallisées au cours de l'étape de déposition. Le dispositif est ainsi plus rigide mécaniquement et protégé des agressions mécaniques et chimiques de l'extérieur.

La déposition de métal conducteur est de préférence effectuée par un procédé chimique sans utilisation de courant électrique.

L'invention a aussi pour objet un dispositif à guide d'ondes produit par ce procédé et comportant :

une âme en matériau non conducteur, ladite âme comportant des parois latérales avec des surfaces externes et internes, les surfaces internes définissant un canal de guide d'ondes ;
une couche de métal conducteur sur les surfaces internes ;
au moins un trou entre lesdites surfaces externes et internes.

Brève description des figures

Des exemples de mise en oeuvre de l'invention sont indiqués dans la description illustrée par les figures annexées dans lesquelles :

- La figure 1 illustre une vue en perspective tronquée d'un dispositif guide d'onde conventionnel à section rectangulaire.

- La figure 2 illustre les lignes de champ magnétiques et électriques dans le dispositif de la figure 1.

- La figure 3 illustre une vue en perspective tronquée d'un dispositif guide d'onde conventionnel à section circulaire.

- La figure 4 illustre les lignes de champ magnétiques et électriques dans le dispositif de la figure 3.

- La figure 5 illustre différentes sections possibles de canaux de transmission dans des dispositifs à guide d'onde.

- La figure 6 illustre une vue en perspective tronquée d'un dispositif guide d'onde à section rectangulaire produit par fabrication additive et dont les parois internes et externes sont toutes deux recouvertes d'une déposition de matériau électrique conducteur.

- La figure 7 illustre une vue en perspective tronquée d'un dispositif guide d'onde à section rectangulaire produit par fabrication additive et dont seules les parois internes sont recouvertes d'une déposition de matériau électrique conducteur.

- La figure 8 illustre une vue en perspective d'un dispositif guide d'onde à section rectangulaire produit par fabrication additive et dont les parois internes sont percées de trous pour l'évacuation des bulles et la circulation de fluide lors de la déposition.

- La figure 9 illustre une vue en perspective d'un dispositif guide d'onde à section circulaire produit par fabrication additive et dont les parois internes sont percées de trous pour l'évacuation des bulles et la circulation de fluide lors de la déposition.

- La figure 10 illustre différentes sections possibles de trous traversants dans des dispositifs à guide d'onde, en montrant la dimension typique Ts à considérer pour chaque section.

- La figure 11 est un diagramme qui illustre l'atténuation en décibel produite par un seul trou de diamètre variable dans une grande paroi d'un dispositif à guide d'ondes à section rectangulaire, selon la fréquence de transmission et le diamètre du trou.

- La figure 12 est un diagramme qui illustre l'atténuation en décibel produite par un seul trou de diamètre variable dans une petite paroi d'un dispositif à guide d'ondes à section rectangulaire, selon la fréquence de transmission et le diamètre du trou.

- La figure 13 est un diagramme qui illustre l'atténuation en décibel produite par deux trous de diamètre variable dans une grande paroi d'un dispositif à guide d'ondes à section rectangulaire, selon la fréquence de transmission et le diamètre du trou. La figure 14 illustre schématiquement un exemple de dispositif guide d'onde qui peut être fabriqué avec le procédé de l'invention.

Exemple(s) de mode de réalisation de l'invention

La figure 7 illustre une vue en perspective d'un dispositif guide d'onde 1 selon l'invention, dans ce cas un dispositif guide d'ondes à section rectangulaire. Il comporte une âme 2 en matériau non conducteur, par exemple en polymère tel que l'époxy, ou la céramique, fabriqué par fabrication additive, par exemple par stéréolithographie. Cette âme délimite un canal interne 5 destiné au guidage d'ondes, et dont la section est déterminée selon la fréquence du signal électromagnétique à transmettre. Les dimensions de ce canal interne a, b et sa forme sont déterminées en fonction de la fréquence opérationnelle du dispositif 1, c'est-à-dire la fréquence du signal électromagnétique pour lequel le dispositif est fabriqué et pour laquelle un mode de transmission stable et optionnellement avec un minimum d'atténuation est obtenu.

L'âme 5 est fabriquée de manière monolithique, par exemple par stéréolithographie. Elle peut aussi être constituée de plusieurs parts formées par stéréolithographie et assemblées entre elles avant le plaquage, par exemple par collage ou fusion thermique.

Les surfaces internes 20 de l'âme 2 délimitent le canal 5. Elles sont recouvertes d'une déposition de matériau conducteur non représentée, par exemple de cuivre, d'argent, d'or, de nickel etc, plaqué par déposition chimique sans courant électrique.

L'épaisseur de ce revêtement conducteur doit être suffisante pour que la surface soit conductrice électriquement à la fréquence radio choisie. Ceci est typiquement obtenu à l'aide d'une couche conductrice déposée sur les parois internes du guide d'onde avec une épaisseur au moins égale à la profondeur de peau $\delta$ :

$$\delta = \sqrt{\frac{2}{\mu \, 2\pi f \, \sigma}}$$

dans laquelle $\mu$ est la perméabilité magnétique du métal plaqué, f est la fréquence radio du signal à transmettre et $\sigma$ est la conductivité électrique du métal plaqué.

Cette épaisseur est sensiblement constante sur toutes les surfaces internes 20 afin d'obtenir une pièce finie avec des tolérances dimensionnelles pour le canal 5 précises. L'épaisseur est de préférence supérieure à 1 $\mu$m.

Les surfaces externes 21 autour de l'âme 2 peuvent aussi être recouvertes d'une déposition du même matériau, d'un autre matériau, ou être nues.

La déposition de métal conducteur 3 sur les faces internes 20 et éventuellement externes 21 se fait en immergeant l'âme 5 dans une série de bains successifs, typiquement 5 à 15 bains. Chaque bain implique un fluide avec un ou plusieurs réactifs. La déposition ne nécessite pas d'appliquer un courant sur l'âme à recouvrir. Un brassage et une déposition régulière sont obtenus en brassant le fluide, par exemple en pompant le fluide dans le canal de transmission 5 et/ou autour du dispositif ou en vibrant l'âme 5 et/ou le bac de fluide, par exemple avec un dispositif vibrant à ultrasons pour créer des vagues ultrasoniques.

Selon un aspect de l'invention, un ou plusieurs trous traversants 7 traversent l'âme 2 entre les surfaces internes et externes 21, de manière à permettre une communication fluidique entre le canal 5 et l'environnement autour du dispositif 1. Dans l'exemple illustré sur cette figure, plusieurs trous de section variable sont prévus sur la grande paroi de largeur interne b et plusieurs trous 7 de section variable sont également prévus sur la petite paroi de hauteur a. Il est cependant aussi possible de prévoir des trous seulement sur la grande paroi, ou seulement sur la petite paroi, ou sur un nombre quelconque des parois. Il est possible de prévoir, 0, 1 ou N trous sur chaque paroi. La section des trous traversants 7 et leur forme peut être identique ou variable.

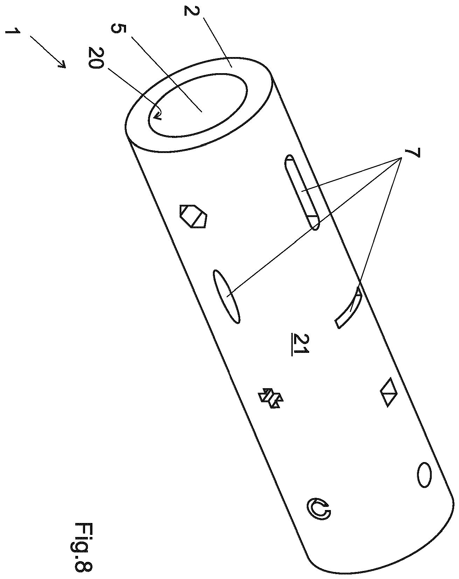

La figure 8 illustre une variante de dispositif à guide d'ondes 1 avec un canal de guidage interne 5 à section circulaire et muni de trous traversants 7 pour l'échange fluidique entre le canal 5 et l'extérieur lors de l'immersion.

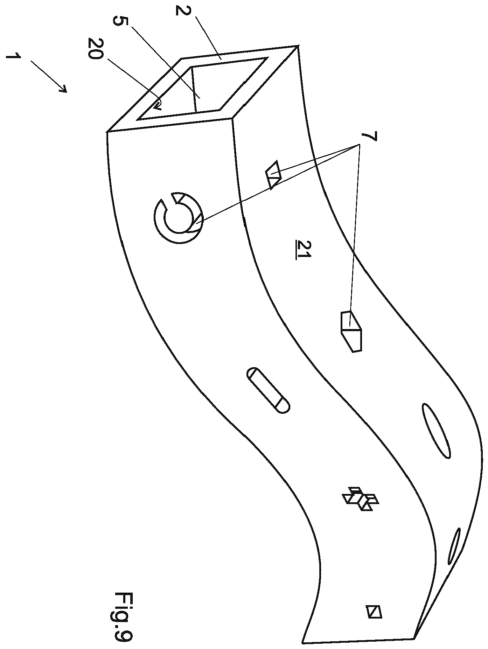

La figure 9 illustre une variante de dispositif à guide d'ondes 1 avec un canal de guidage interne 5 à section rectangulaire, le canal 5 étant cependant ondulé et non parallélépipédique. Il est également muni de trous traversants 7 pour l'échange fluidique entre le canal 5 et l'extérieur lors de l'immersion.

Les trous s'étendent dans tous ces exemples perpendiculairement aux surfaces internes 20 et externes 21, et perpendiculairement à la direction principale selon laquelle s'étend le canal 5. Des trous orientés obliquement peuvent aussi être réalisés.

La taille des trous 7, leur forme, leur orientation, leur espacement, leur distribution sur les surfaces internes et externes, leur nombre et leur densité affectent notamment les caractéristiques suivantes :

- Efficacité de l'échange de fluide depuis et vers le canal 5 lors de la déposition des surfaces conductrices sur l'âme 2.

- Efficacité de l'évacuation des bulles hors du canal 5 lors de cette étape de déposition.

- Performance du dispositif guide d'onde, par exemple atténuation du signal transmis ou autres perturbations du signal causées par les trous.

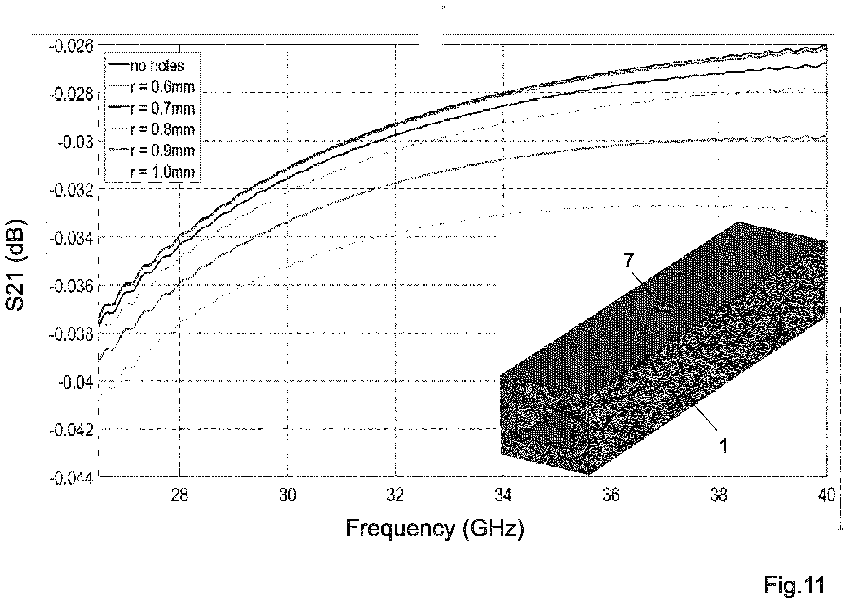

La figure 11 illustre l'atténuation de signal RF en décibels produite par un seul trou de section circulaire 7 de 50mm de long, le trou étant prévu à travers une des grandes parois d'un dispositif à guide d'ondes à section rectangulaire, pour différentes fréquences de transmission. Les différentes courbes correspondent à différents diamètres de trous 7. Dans la figure 11, où on montre un exemple de guide d'ondes en bande Ka, on voit que l'atténuation est négligeable pour un trou de diamètre 0,6 et 0,7 mm, mais qu'elle augmente plus rapidement au-delà. Les valeurs absolues dépendent du type de dispositif à guide d'ondes et de ses dimensions. Le diagramme démontre cependant que l'usage de trous de dimensions suffisantes pour le but décrit peut être considéré sans affecter le fonctionnement du dispositif.

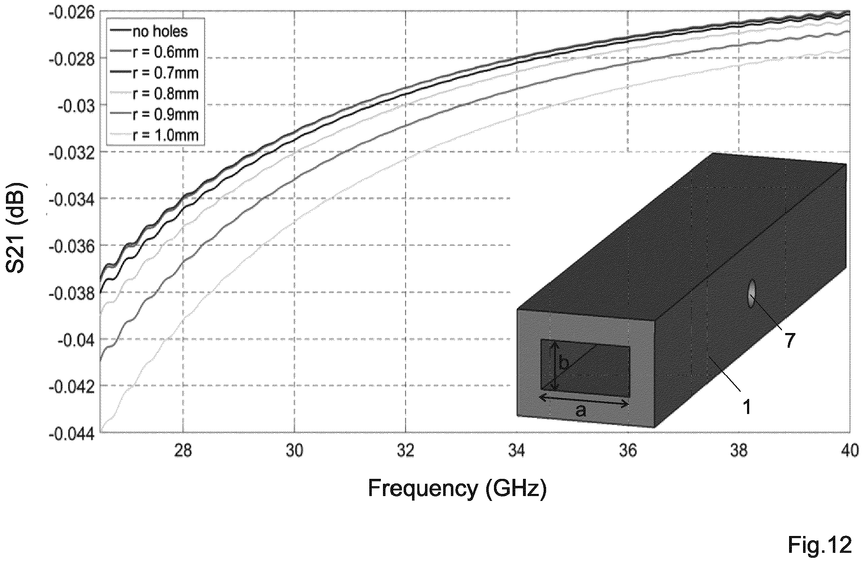

La figure 12 illustre l'atténuation de signal RF en décibels produite par un seul trou 7 identique à celui de la figure 11, mais prévu à travers une des petites parois du même dispositif à guide d'ondes. Les différentes courbes correspondent à différents diamètres de trous 7. On voit que l'atténuation augmente également avec le diamètre du trou, mais qu'elle reste moins importante que lorsque le trou est prévu dans une des grandes parois de largeur b. Cette simulation suggère qu'il est généralement préférable de prévoir des trous (possiblement traversants) sur les petites parois du dispositif à guide d'ondes, au moins dans le cas de dispositifs à section rectangulaire en mode de transmission $TE_{10}$.

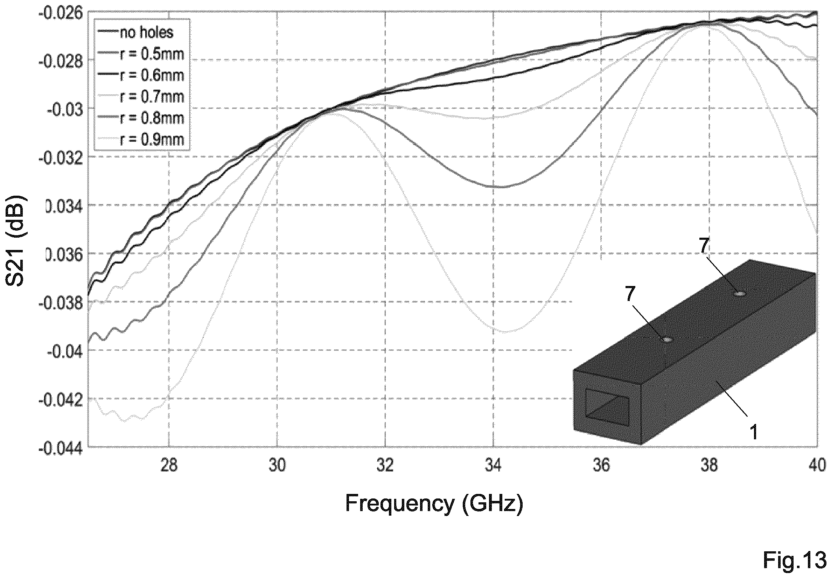

La figure 13 illustre l'atténuation de signal RF en décibels produite par deux trous 7 dans un dispositif identique à celui de la figure 11, les trous étant prévus à travers une des grandes parois à guide d'ondes. Les différentes courbes correspondent à différents diamètres de trous 7. A nouveau, l'atténuation du signal électromagnétique a généralement tendance à augmenter avec le diamètre du trou. Elle est cependant aussi fortement dépendante de la fréquence ce qui suggère une perturbation du mode de transmission à certaines fréquences.

De manière générale, les dimensions des trous 7 entre les parois internes et externes 20, 21 affectent les performances radiofréquence du dispositif. Cette dégradation de performance est cependant acceptable si la dimension typique des trous Ts est inférieure au tiers de la longueur d'onde $\lambda$ dans l'espace libre à la fréquence opérationnelle du dispositif :

$$Ts < \lambda / 3$$

Dans un mode de réalisation préférentiel, la dimension typique des trous Ts est inférieure au cinquième de Ts.

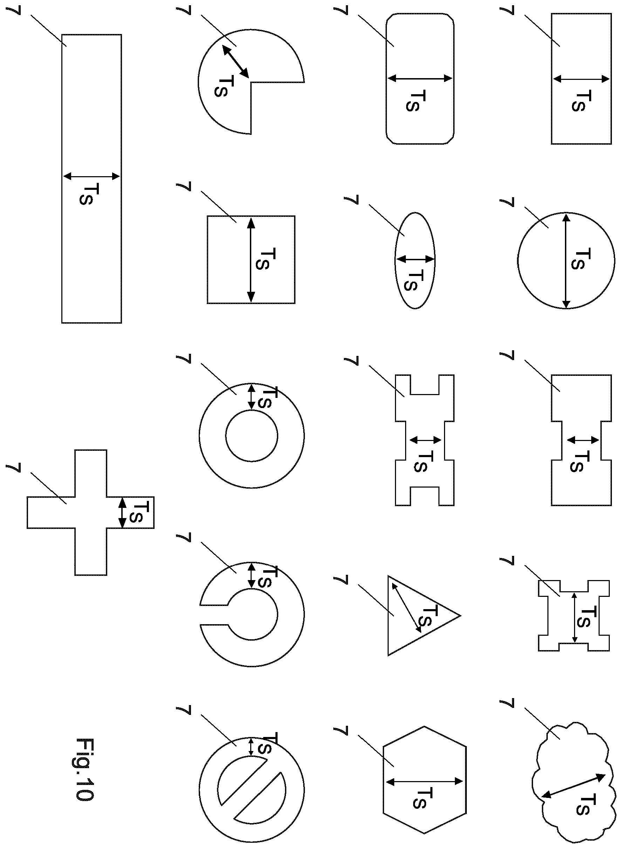

Différentes sections possibles pour les trous traversants 7 sont illustrés sur la figure 10 qui montre aussi la dimension typique Ts à considérer pour chaque forme. Dans le cas d'un canal 5 à section rectangulaire, la dimension typique est la hauteur b (c'est-à-dire la dimension perpendiculaire à la direction principale du canal de la plus petite paroi). Dans le cas d'un canal 5 à section circulaire, la dimension typique Ts est constituée par le diamètre. D'autres dimensions typiques sont illustrées sur la figure 10.

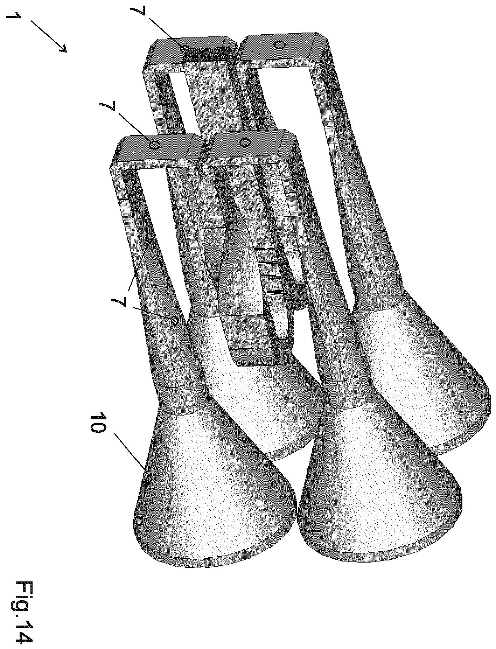

La figure 14 illustre schématiquement un exemple de dispositif guide d'onde 1 qui peut être fabriqué avec le procédé de l'invention. Il s'agit dans cet exemple non limitatif d'un réseau d'antennes comportant des pavillons 10 et des sections de transmission formant un réseau formeur de faisceau (beamforming network). Toutes les surfaces internes doivent être métallisées, c'est-à-dire recouvertes d'une déposition métallique. L'âme 5 est fabriquée par fabrication additive, par exemple par stéréolithographie, dans un polymère ou une céramique, ou une combinaison des deux. Le dispositif 1 comporte des trous 7 qui peuvent être soit obtenus directement par le processus de fabrication additives, soit, ou pour certains d'entre eux, percés après coup.

L'invention au aussi pour objet un procédé de fabrication comportant :

l'introduction de données dans un ordinateur représentant la forme d'une âme 2 de dispositif à guide d'ondes, telle que décrite ci-dessus ;

l'utilisation de ces données pour réaliser par fabrication additive une âme de dispositif à guide d'ondes.

Par ailleurs, l'invention concerne aussi un support de données informatique contenant des données destinées à être lues par un dispositif de fabrication additive pour fabriquer un objet, lesdites données représentant la forme d'une âme pour dispositif 1 à guide d'ondes, ladite âme comportant des parois latérales avec des surfaces externes 21 et internes 20, les surfaces internes définissant un canal 5 de guide d'ondes ; ladite âme comportant au moins un trou 7 entre lesdites surfaces externes et internes.

Le support de données informatique peut être constitué par exemple par un disque dur, une mémoire flash, un disque virtuel, une clé USD, un disque optique, un support de stockage dans un réseau ou de type cloud, etc.

## Revendications

1. Procédé de fabrication de dispositif (1) à guide d'onde comprenant les étapes suivantes :

   - fabriquer une âme (2) comportant des parois latérales avec des surfaces externes (21) et internes (20), les surfaces internes définissant un canal de guide d'ondes (5);

   déposer une couche de métal conducteur (3) sur les surfaces internes (20), par immersion dans un fluide de réactifs ; **caractérisé en ce que** ladite âme (2) comporte au moins un trou (7) entre lesdites surfaces externes et internes, spécifiquement destiné à favoriser l'évacuation de bulles dans ledit canal (5) et/ou la circulation du fluide lors de ladite immersion.

2. Procédé selon la revendication 1, ledit canal (5) ayant une section plus importante que ledit trou (7).

3. Procédé selon l'une des revendications 1 à 2, la dimension typique (Ts) du ou des trous (7) étant inférieure au tiers de la longueur d'onde ($\lambda$) dans l'espace libre à la fréquence opérationnelle du dispositif.

4. Procédé selon l'une des revendications 1 à 3, la dimension typique (Ts) du ou des trous (7) étant inférieure à 2 millimètres.

5. Procédé selon l'une des revendications 1 à 4, le ou les trous (7) s'étendant perpendiculairement auxdites parois (20, 21) et à la direction principale du canal.

6. Procédé selon l'une des revendications 1 à 5, la fabrication de ladite âme (5) comportant une étape de fabrication additive.

7. Procédé selon l'une des revendications 1 à 6, comportant une étape de traitement de surface de ladite âme (5) afin de favoriser l'accrochage de la couche de métal conducteur.

8. Procédé selon l'une des revendications 1 à 7, la déposition de métal conducteur (3) étant effectuée par un procédé chimique sans utilisation de courant électrique.

9. Procédé selon l'une des revendications 1 à 8, ladite âme (5) comportant plusieurs dits trous (7) entre les parois internes et externes (20, 21), le diamètre de chaque trou étant inférieur à 1mm.

10. Procédé selon l'une des revendications 1 à 9, la déposition comprenant une étape de pompage de fluide à travers ledit au moins un trou (7).

11. Dispositif (1) à guide d'ondes comportant :

    une âme (5) comportant des parois latérales avec des surfaces externes (21) et internes (20), les surfaces internes définissant un canal (5) de guide d'ondes ;
    une couche de métal conducteur (3) sur les surfaces internes (20) ;
    au moins un trou (7) entre lesdites surfaces externes et internes.

12. Dispositif selon la revendication 11, ledit canal (5) ayant une section plus importante que ledit trou (7).

13. Dispositif selon l'une des revendications 11 à 12, la dimension typique (Ts) du ou des trous (7) étant inférieure au tiers de la longueur d'onde ($\lambda$) dans l'espace libre à la fréquence opérationnelle du dispositif.

14. Dispositif selon l'une des revendications 11 à 13, la dimension typique (Ts) du ou des trous (7) étant inférieure à 1,6 millimètres.

15. Dispositif selon l'une des revendications 11 à 14, ledit trou s'étendant perpendiculairement auxdites parois et à la direction principale du canal.

Fig.1

Fig.2

Fig.3

Fig.4

Fig.5A  Fig.5B  Fig.5C  Fig.5D  Fig.5E
Fig.5F  Fig.5G  Fig.5H  Fig.5I  Fig.5J
Fig.5K  Fig.5L  Fig.5M  Fig.5N  Fig.5O

Fig.6

Fig.7

Fig.8

Fig.9

Fig.10

EP 4 425 698 A2

Fig.11

Fig.12

Fig.13

Fig.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120084968 A

**Littérature non-brevet citée dans la description**

- **YILEY HUANG et al.** Layer-by-Layer stereolithography of three-dimensional antennas'', présenté lors du « Antennas and propagation society symposium. IEEE, 2005, vol. 1A, 276